(19) Europäisches Patentamt
European Patent Office
Office européen des brevets

(11) **EP 4 468 521 A1**

(12) **EUROPEAN PATENT APPLICATION**
published in accordance with Art. 153(4) EPC

(43) Date of publication:
**27.11.2024 Bulletin 2024/48**

(21) Application number: **23743187.9**

(22) Date of filing: **13.01.2023**

(51) International Patent Classification (IPC):
***H01Q 15/14*** *(2006.01)*

(52) Cooperative Patent Classification (CPC):
**H01Q 15/14**

(86) International application number:
**PCT/JP2023/000797**

(87) International publication number:
**WO 2023/140193 (27.07.2023 Gazette 2023/30)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **19.01.2022 JP 2022006361**

(71) Applicant: **Nitto Denko Corporation
Ibaraki-shi, Osaka 567-8680 (JP)**

(72) Inventors:
• **NAGAOKA, Naoki
Ibaraki-shi, Osaka 567-8680 (JP)**
• **KATO, Daiki
Ibaraki-shi, Osaka 567-8680 (JP)**
• **YAKUWA, Shimpei
Ibaraki-shi, Osaka 567-8680 (JP)**
• **IMAMURA, Shunji
Ibaraki-shi, Osaka 567-8680 (JP)**

(74) Representative: **Hoffmann Eitle
Patent- und Rechtsanwälte PartmbB
Arabellastraße 30
81925 München (DE)**

(54) **REFLECTOR**

(57)     Provided is a reflector having reflection characteristics of a broad frequency band. The reflector includes: a dielectric layer; a conductive layer that is provided on a first surface of the dielectric layer and includes a periodical arrangement of a plurality of conductor patterns; and a ground layer that is provided on a second surface opposite to the first surface. The conductive layer is configured to reflect incident waves at an angle having a size different from that of an incident angle of the incident waves. The dielectric layer has a relative dielectric constant of 2.0 or less.

FIG.1

EP 4 468 521 A1

**Description**

TECHNICAL FIELD

The present disclosure relates to reflectors, especially to a reflector including a metasurface.

BACKGROUND ART

When radio waves having high frequencies, such as microwaves, millimeter waves, and terahertz waves, are used for wireless communication, high-speed and large-capacity communication becomes possible. Meanwhile, radio waves having high frequencies of, for example, from 1 GHz through 10 THz have a strong linearity. Thus, there is a disadvantage that radio waves cannot reach a receiving antenna due to obstacles between a transmitting antenna and the receiving antenna, thereby making communication impossible. In order to improve communication environments and communication areas of mobile communication using highfrequency waves, reflectors are used. A typical reflector has a specular reflection surface on which an incident angle and a reflection angle are the same, and thus has a limit in terms of the reflection range. In order to extend the communication range, a metareflector having a metasurface that reflects incident waves in a desired direction has been actively developed.
The term "metasurface" means an artificial surface that controls transmission and reflection characteristics of incident electromagnetic waves. Metal patterns of about half wavelength are arranged periodically to control the reflection characteristics and reflect the incident waves in a desired direction. A reflectarray is proposed in which array elements are formed in divided regions on a substrate, and gaps between a plurality of patches forming the array elements are different from region to region (see, for example, Patent Document 1).

RELATED ART DOCUMENTS

PATENT DOCUMENTS

Patent Document 1: Japanese Patent No. 5177708

SUMMARY OF THE INVENTION

PROBLEMS TO BE SOLVED BY THE INVENTION

A reflector array having a metasurface utilizes a resonance phenomenon. Thus, such a reflector array has a narrow frequency band in which reflection in a desired direction is achievable. When the reflection band is narrow, the reflection peak is shifted due to changes in usage environments, and necessary reflection characteristics may not be obtained at the intended frequency. For the 5G standard, frequency bands of 24 GHz or higher are used in many countries. In Japan, the 28 GHz band covers a range of from 27 GHz through 29.5 GHz. In Europe, the United States of America, China, and the like, the frequency bands used there include a bandwidth of from about 1 GHz through about 3.5 GHz. The metareflector desirably has reflection characteristics of a broad frequency band covering the range of from 24 GHz through 30 GHz.
In one aspect, it is an object of the present invention to provide a reflector having reflection characteristics of a broad frequency band.

MEANS FOR SOLVING THE PROBLEMS

In one embodiment, a reflector includes: a dielectric layer; a conductive layer that is provided on a first surface of the dielectric layer and includes a periodical arrangement of a plurality of conductor patterns; and a ground layer that is provided on a second surface opposite to the first surface. The conductive layer is configured to reflect incident waves at an angle different from an incident angle of the incident waves. The dielectric layer has a relative dielectric constant of 2.0 or less.

ADVANTAGEOUS EFFECTS OF THE INVENTION

With the above configuration, a reflector having reflection characteristics of a broad frequency band is achieved.

BRIEF DESCRIPTION OF THE DRAWINGS

[FIG. 1] FIG. 1 is a view illustrating a basic configuration of a reflector of a first embodiment.
[FIG. 2] FIG. 2 is a graph illustrating an example of a method of designing a conductor pattern.
[FIG. 3] FIG. 3 is a view illustrating an example of design of the reflector of the first embodiment.
[FIG. 4] FIG. 4 is a graph illustrating reflection characteristics of a reflector according to the design in FIG. 3.
[FIG. 5] FIG. 5 is graphs illustrating reflection characteristics of a low-dielectric-constant reflector at different frequencies.
[FIG. 6] FIG. 6 is graphs illustrating reflection characteristics of a high-dielectric-constant reflector at different frequencies.
[FIG. 7A] FIG. 7A is a graph illustrating a reflection range of the low-dielectric-constant reflector with respect to frequencies.
[FIG. 7B] FIG. 7B is a graph illustrating a reflection range of the high-dielectric-constant reflector with respect to frequencies.
[FIG. 8] FIG. 8 is a graph illustrating a relationship between the thicknesses of dielectric layers having different dielectric constants, and the corresponding reflection bandwidths.
[FIG. 9] FIG. 9 is a graph illustrating a relationship between the thicknesses of dielectric layers having different dielectric constants, and the corresponding reflection intensities.
[FIG. 10] FIG. 10 is a table illustrating configurations and characteristics of examples and comparative examples.
[FIG. 11] FIG. 11 is a schematic view of a reflector according to a second embodiment.
[FIG. 12] FIG. 12 is a table illustrating simulation results obtained by changing the thickness and dielectric constant of a protective layer.
[FIG. 13] FIG. 13 is a view illustrating an example of use of the reflector according to the embodiment in comparison with use of a typical reflector.

DETAILED DESCRIPTION OF THE INVENTION

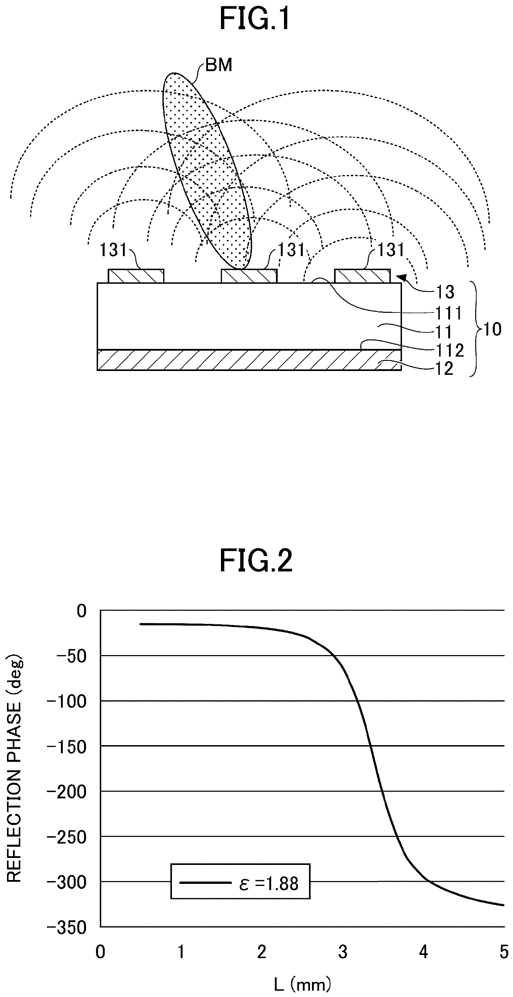

FIG. 1 is a basic configuration view of a reflector 10 of a first embodiment. The reflector 10 includes: a dielectric layer 11; a conductive layer 13 provided on a first surface 111 of the dielectric layer 11; and a ground layer 12 provided on a second surface 112 of the dielectric layer 11 opposite to the first surface 111. The conductive layer 13 includes a periodical arrangement of a plurality of conductor patterns 131, and functions as a reflection surface of the reflector 10. This reflection surface is a metasurface that reflects incident waves at an angle (absolute value) having a size different from that of the incident angle. By the presence of the ground layer 12, a capacitance is formed between the ground layer 12 and each of the conductor patterns 131, and the magnitude of the phase lag can be controlled for each of the conductor patterns 131.

In the conductive layer 13, the conductor patterns 131 of different sizes are arranged at a predetermined pitch. The size and pitch of the conductor patterns 131 are set in accordance with intended reflection characteristics. The conductor patterns 131 each have a size that is sufficiently smaller than the wavelength in use, and selectively reflect radio waves of an intended frequency band. The phase of reflection is controlled by the conductor patterns 131, and reflected waves are superimposed with each other, thereby forming a reflected beam BM in a desired direction.

The wavelength of the incident radio waves is denoted by $\lambda$, the pitch of the conductor patterns 131, i.e., the distance between the centers of the conductor patterns 131 next to each other is denoted by d, the phases of the radio waves reflected by the two conductor patterns 131 next to each other are denoted by $\delta1$ and $\delta2$, and the reflection angle is denoted by $\theta$. The phase difference $\delta1-\delta2$ is expressed by formula (1).

$$\delta1 - \delta2 \ = \ (2\pi/\lambda)d \cdot \sin\theta + 2n\pi \qquad\qquad (1)$$

Here, n is an integer.

In order to reflect radio waves in a desired direction by the reflector 10, $\delta1$, $\delta2$, and d may be designed so as to obtain an intended reflection angle $\theta$. The reflection angle $\theta$ is set to a desired angle excluding 0° and 90° between the normal direction (0°) and the horizontal direction (90°) of the reflection surface of the reflector 10. The values of $\delta1$ and $\delta2$ representing the reflection phases can be controlled and changed by such design parameters as the wavelength $\lambda$ of the incident radio waves, the size (length $\times$ width) and pitch of the conductor patterns 131, and the thickness and relative dielectric constant of the reflector 10. For example, when designing a length L of the conductor patterns 131 for obtaining a desired phase difference, the conductor patterns 131 may be designed by creating a graph of length/phase characteristics illustrated in FIG. 2. The length/phase characteristics illustrated in FIG. 2 can be obtained by measuring the reflection patterns of the radio waves while changing the length L of the conductor patterns with the design parameters other than the length L (mm) being fixed, followed by performing analysis using three-dimensional electromagnetic field simulation software. As the design parameters other than the length, for example, the relative dielectric constant $\varepsilon$ of the dielectric layer 11 is fixed at $\varepsilon$=1.88.

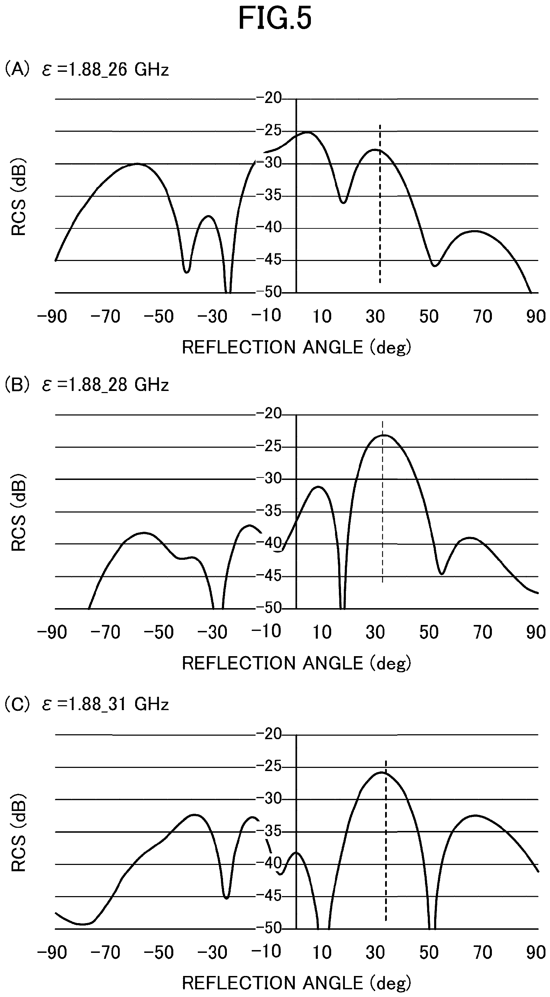

The relative dielectric constant of the dielectric layer 11 is 2.0 or less. By setting the relative dielectric constant to 2.0 or less, the frequency band of the radio waves to be reflected in a predetermined direction can be extended. Details of the extension of the frequency band of reflection will be described below with reference to FIG. 5 and subsequent drawings. As the dielectric material having a relative dielectric constant of 2.0 or less, fluororesins, such as polytetrafluoroethylene and the like, conjugates formed between fluororesins and inorganic porous aggregates, other transparent porous resins, or the like can be used. As the resins to be conjugated with the inorganic porous aggregates, polytetrafluoroethylene, polystyrene, polytetrafluoroethylene, or the like can be used.

The inorganic porous aggregates are produced, for example, by the method described in Japanese Laid-Open Patent Application No. 2017-171898. By adjusting the material, the aggregation density, and the like of the porous inorganic particles, it is possible to control the porosity of the conjugate to 50% or higher. By adjusting the porosity to control the relative dielectric constant, it is possible to achieve the dielectric constant of 2.0 or less.

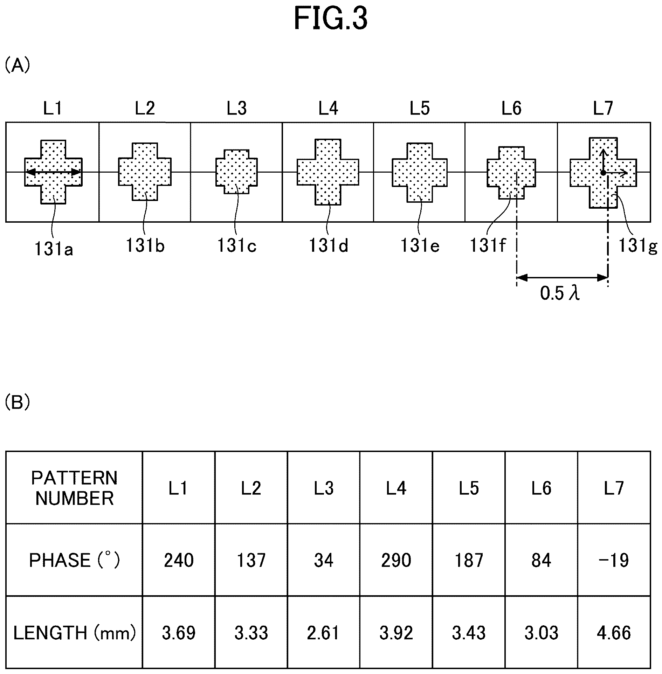

FIG. 3 is a view illustrating an example of design of the reflector 10 of the first embodiment. (A) of FIG. 3 illustrates the arrangement of conductor patterns 131a to 131g forming the conductive layer 13. (B) of FIG. 3 illustrates the size and phase of each of the conductor patterns. The conductor patterns 131a to 131g are cross patterns each having vertical and horizontal lengths that are equal to each other. The sizes of the conductor patterns 131 are denoted by vertical or horizontal lengths L1 to L7. The pitch of the conductor patterns 131a to 131g, i.e., the center-to-center distance d, is set to 1/2 the wavelength in use. The wavelength $\lambda$ in the 28 GHz band is 10.8 mm, and thus the pitch of the conductor patterns 131a to 131g is 5.4 mm.

The reflection angle of 35° is targeted by the arrangement of the conductor patterns 131a to 131g. The reflection angle in this case is a reflection angle when radio waves are incident so as to be perpendicular to the reflector 10, i.e., a reflection angle with respect to the normal. When "$\delta1-\delta2$", a phase difference at a $\theta$ of 35°, is obtained in accordance with the above formula (1), the phase difference is 103°. In order to obtain this phase difference, the sizes of the conductor patterns 131a to 131g, i.e., the lengths L1 to L7, are determined.

The shape of the conductor patterns 131 is not limited to the cross pattern, and circular, elliptical, polygonal, or other shapes of different sizes may be provided at a predetermined period. The size of the conductor pattern 131 is from 2 mm through 5 mm when the 28 GHz band is targeted. However, the size of the conductor patterns 131 is appropriately designed in accordance with the frequency band. Radio waves having a frequency determined by the size and period of the conductor patterns 131 are selectively reflected. The frequency band selected by resonance is generally narrow. However, by setting the relative dielectric constant of the dielectric layer 11 to 2.0 or less, the frequency band selected as described below is extended to a bandwidth of 4 GHz or more, and more preferably 6 GHz or more. The selected frequency bandwidth can vary depending on the thickness of the dielectric layer 11 of the reflector 10. Thus, a broad-band reflector exceeding 6.5 GHz/mm as a bandwidth per unit thickness (1 mm) of the reflector 10 is achieved.

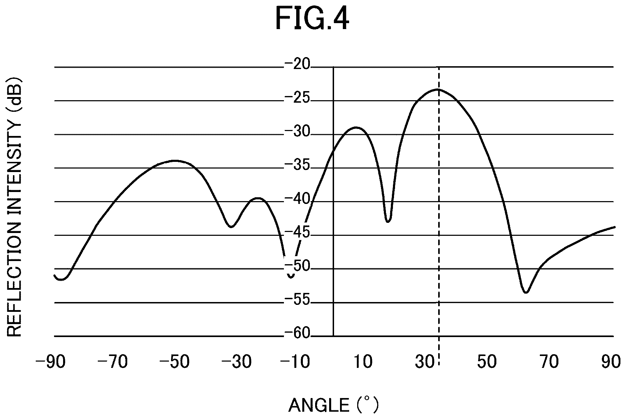

FIG. 4 illustrates the reflection characteristics of the reflector 10 according to the design in FIG. 3. The horizontal axis indicates the angle, and the vertical axis indicates the reflection intensity (dB). The main peak is observed in the direction of 35°, and this confirms that the reflector 10 can control the reflection direction of the radio waves substantially as designed. In addition, the bandwidth of a main lobe at 35°, i.e., a frequency range reduced by 3 dB from the peak, is 4 GHz or more and more preferably 6 GHz or more. The reflection characteristics in an oblique direction covering a broad frequency bandwidth of the reflector 10 are developed in the frequency band of from 24 GHz through 60 GHz.

<Extension of Reflection Frequency Band by Reduction in Dielectric Constant>

By using a material having a low relative dielectric constant for the dielectric layer 11 of the reflector 10, the frequency band of reflection can be extended. The frequency band of reflection refers to a frequency range attenuated by 3 dB from the peak intensity of the main lobe of the waves reflected in the target direction with respect to the incident waves having the wavelength in use.

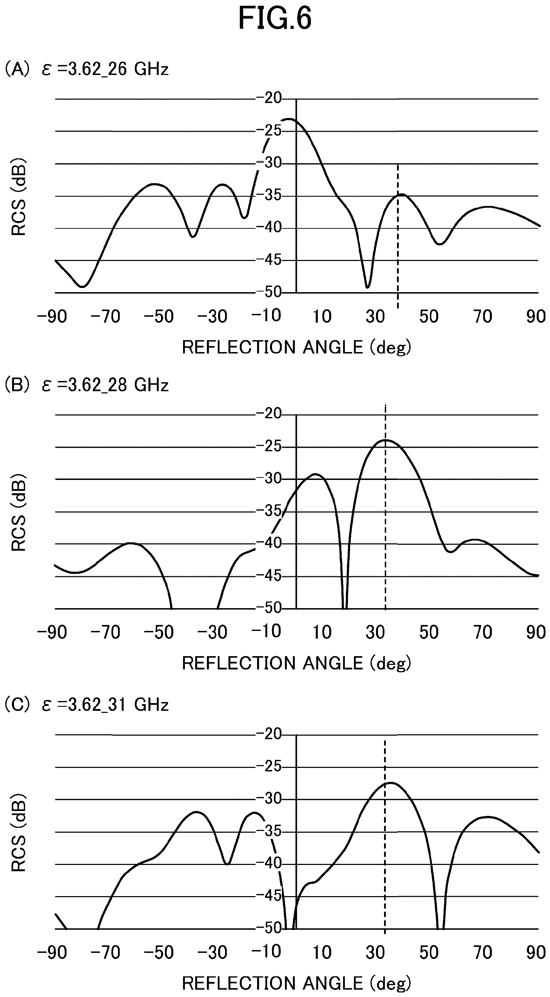

FIG. 5 illustrates reflection characteristics of the low-dielectric-constant reflector with respect to incident waves of different frequencies. The low-dielectric-constant reflector is the reflector of the embodiment, i.e., the reflector 10 including the dielectric layer 11 having a relative dielectric constant of 2.0 or less. In this example, a dielectric layer having a relative dielectric constant $\varepsilon$ of 1.88 is used. FIG. 6 illustrates, for comparison, reflection characteristics of the high-dielectric-constant reflector with respect to incident waves of different frequencies. The high-dielectric-constant reflector is a reflector including a dielectric layer having a relative dielectric constant exceeding 2.0.

In FIG. 5, the dielectric layer 11 having a relative dielectric constant $\varepsilon$ of 1.88 is used to calculate reflection spectra at 26 GHz, 28 GHz, and 31 GHz. The reflection intensity on the vertical axis is indicated by a scattering cross section (RCS: Rader Cross Section) that is an index of reflection capability. Plane waves having a frequency band of 26 GHz, 28 GHz, or 31 GHz are incident from the direction normal to the reflector, and the scattering cross section is analyzed for each of the angles using CST Studio Suite available from Dassault Systemes Inc., which is commonly-used three-dimensional electromagnetic field simulation software.

When ε = 1.88, the peak of the reflection spectrum appears in the direction of 35° at all of 26 GHz, 28 GHz, and 31 GHz. The peak value in all of the frequency bands is within the range of -25 dB ± 2.5 dB. The stable peak intensity is obtained over a band of at least 5 GHz at the target reflection angle of 35°.

Especially, at 28 GHz and 31 GHz, the main lobe at the reflection angle of 35° is clearly distinguished from the other side lobes. This indicates that the incident waves are reflected in the intended direction of 35° in a well-controlled manner. At 26 GHz, in addition to the peak at 35°, other peaks appear at 0° and -65°. The peak at 0° indicates reflection in the same direction as that in the incident waves, which leads to a loss. The peak at -65° indicates reflection in the direction opposite to that in the target angle of 35°. Thus, in accordance with the environment in which the reflector is used, this may lead to a loss or may be an advantage of transmitting radio waves in two directions at once.

In the comparative example illustrated in FIG. 6, the relative dielectric constant ε is changed to 3.62, and the other conditions, such as the conductor patterns and the like, are maintained to be the same as those of the reflector illustrated in FIG. 5. Examples of materials having a relative dielectric constant of 3.62 include polyphenylene ether (PPE), acrylic resins, and the like. At a relative dielectric constant of 3.62, the reflection peak appears in the target direction of 35° at 28 GHz and 31 GHz, but the spectrum shape of the main lobe at 31 GHz are degraded. At 26 GHz, no reflection is obtained in the intended direction of 35°.

The configuration of FIG. 6 directly represents the fact that the reflection characteristics are degraded in accordance with a change in the frequency in the case of the metasurface that utilizes resonance. By using the low-dielectric-constant reflector of the embodiment illustrated in FIG. 5, the frequency characteristics can be greatly improved. Based on FIGS. 5 and 6, it is found that the frequency band of reflection can be extended by reducing, to some extent, the dielectric constant of the dielectric layer 11 used in the reflector 10.

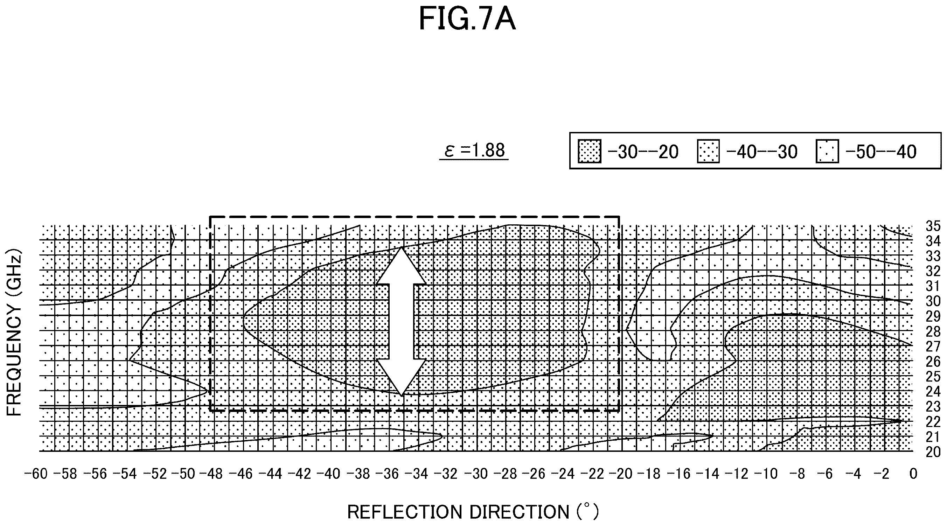

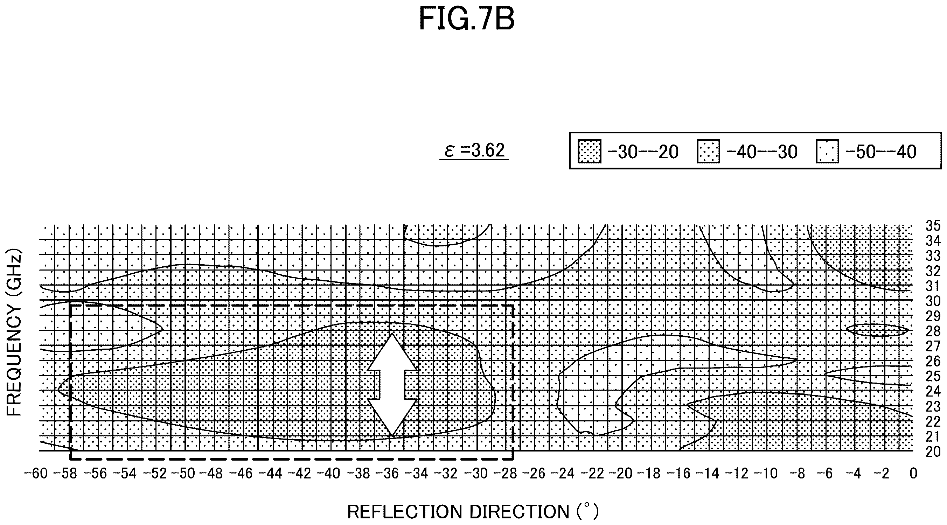

FIG. 7A illustrates the reflection range of the low-dielectric-constant reflector, and FIG. 7B illustrates the reflection range of the high-dielectric-constant reflector. In FIGS. 7A and 7B, the horizontal axis indicates the reflection direction, and the vertical axis indicates the frequency. The model of the reflector used is one in which the same conductor patterns as illustrated in (A) of FIG. 3 are formed on the surface of the dielectric layer. The relative dielectric constant ε of the low-dielectric-constant reflector of FIG. 7A is set to 1.88, and the relative dielectric constant ε of the high-dielectric-constant reflector of FIG. 7B is set to 3.62.

As illustrated in FIG. 7A, the high reflection intensity (higher than -30 dB and -20 dB or lower) is obtained from 24 GHz through 33 GHz in the target direction of 35°. This reflection intensity is distributed in the range of ±10° around the center of 35°. Especially, in the range of 23° or higher and 35° or lower, the reflection intensity of higher than -30 dB and -20 dB or lower is obtained over the frequency band of 10 GHz or more. The reflection frequency characteristics over the broad range provide high resistance to environmental changes.

As illustrated in FIG. 7B, when the relative dielectric constant is 3.62, the high reflection intensity (higher than -30 dB and -20 dB or lower) is obtained from 21 GHz through 28.5 GHz in the target direction of 35°. However, considering the frequency band actually used in each country, the practical frequency band of the reflector of FIG. 7B is in the range of from 24 GHz through 28.5 GHz. Considering the frequency band used in each country and the possibility of a peak shift, a reflector having a frequency bandwidth of 6 GHz or more in the frequency band of 24 GHz or more and 60 GHz or less is desirable.

FIGS. 7A and 7B can indicate that as the dielectric constant of the dielectric layer 11 of the reflector is lower, the reflection range (angle range) with respect to the frequency is broader in conjunction with the practical frequency band of reflection is broader.

<Thickness of Dielectric Layer>

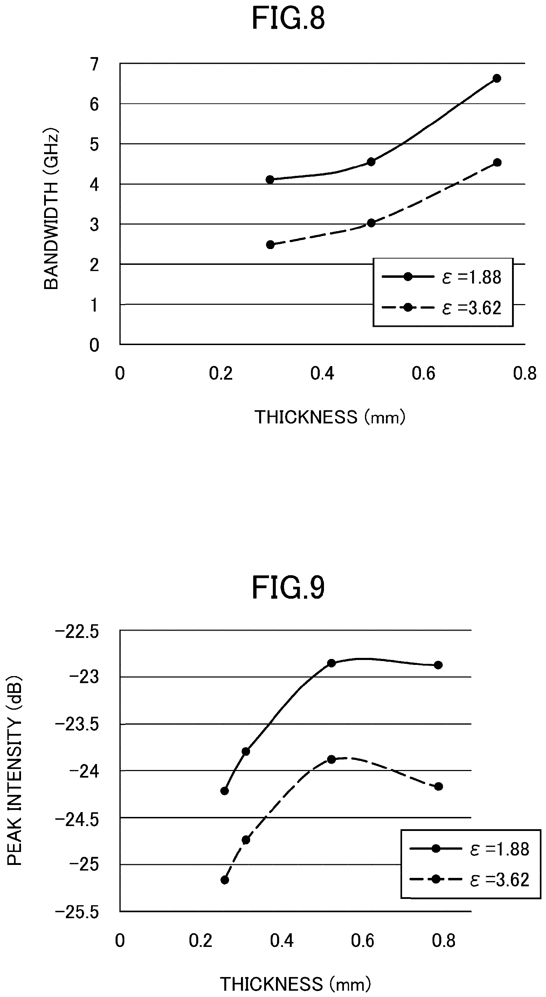

The thickness of the dielectric layer 11 will be studied with reference to FIGS. 8 and 9. FIG. 8 illustrates a relationship between the thicknesses of dielectric layers having different dielectric constants, and the corresponding reflection bandwidths. FIG. 9 illustrates a relationship between the thicknesses of dielectric layers having different dielectric constants, and the corresponding reflection intensities. As illustrated in FIG. 8, the thickness of the dielectric layer 11 is changed from 0.30 mm to 0.50 mm and then 0.75 mm. The conductor patterns 131 formed on the first surface 111 of the dielectric layer 11 are the same as those illustrated in (A) of FIG. 3. The pattern configuration of the conductor is the same, but the relative dielectric constant ε of the dielectric layer 11 is different. Plane waves of 28 GHz are incident from the direction normal to the reflector, and the bandwidth of the reflected waves is analyzed. The bandwidth of the reflected waves is the above-described frequency bandwidth attenuated by 3 dB from the peak value of the main lobe of the reflection.

When the thickness of the dielectric layer 11 is the same, as the relative dielectric constant ε is lower, the bandwidth of the reflection is broader. In other words, in an attempt to achieve the same bandwidth, a material having a lower dielectric constant can form a thinner reflector. In the example of FIG. 8, when the thickness of the dielectric layer 11 is 0.75 mm, the reflector having an ε of 1.88 achieves a bandwidth exceeding 6.5 GHz, while the reflector having an ε of 3.62 can only cover the bandwidth of 4.5 GHz.

As described above, considering the frequency band used in each country and the peak shift, it is desirable that the frequency bandwidth of the reflection exceeds 6 GHz in the frequency band of 24 GHz or more and 30 GHz or less. Interpolation of the data points of FIG. 8 may suggest that the bandwidth of 6 GHz is achievable by increasing the thickness of the dielectric layer 11 having an ε of 3.62 to about 1.2 m. However, in this case, the reflector becomes thicker to have reduced flexibility, and the application range thereof is limited.

Meanwhile, when ε is 1.88, the bandwidth of 6.5 GHz is achieved when the dielectric layer 11 has a thickness of 0.75 mm, thereby achieving a flexible reflector in the form of a sheet. The reflector in the form of a sheet is readily handled, and can be attached to a desired place like in a wallpaper sheet. It is a great advantage that a broader band can be achieved by the dielectric layer 11 that is thin and flexible.

As illustrated in FIG. 9, the peak intensity of the reflected waves is calculated by changing the thickness of the dielectric layer 11 from 0.25 mm to 0.30 mm to 0.50 mm to 0.80 mm. When the relative dielectric constant ε is 1.88, the peak intensity exceeding -24 dB is obtained by making the dielectric layer 11 have a thickness of 0.30 mm or larger. When ε is 3.62, the same extent of the peak intensity cannot be obtained unless the thickness of the dielectric layer 11 is 0.5 mm.

From the results of FIG. 9, the low-dielectric-constant reflector of the embodiment is advantageous from the viewpoint of thinning and lightening of a device.

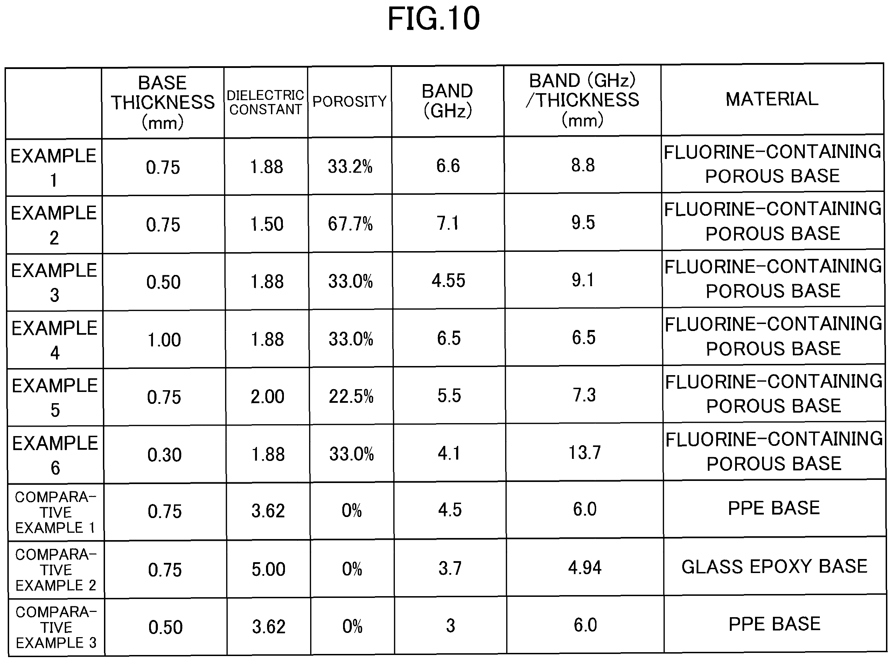

FIG. 10 illustrates configurations and characteristics of the examples and the comparative examples. Parameters in the configurations are the type, thickness, relative dielectric constant, and porosity of a base that forms the dielectric layer 11. The values of these parameters are changed in various ways. As the characteristics of the reflector, the frequency band of the reflected waves and the bandwidth per unit thickness are shown. In the examples and the comparative examples, the conductor patterns 131 are the conductor patterns 131a to 131g illustrated in (A) of FIG. 3, and the type and parameters of the dielectric layer 11 are changed.

Simulation was performed under the following conditions, and the frequency bands of the examples and the comparative examples were determined from the far radiation field, intensity, and angle of the reflection spectrum with respect to the incident waves.

> Wavelength of incident waves: 10.7 mm (frequency: 28 GHz)
> Frequency variable range of incident waves: from 20 GHz through 35 GHz
> Incident angle of incident waves with respect to the direction normal to the reflector: 0 degrees
> First desired reflection angle θ of reflection spectrum with respect to the direction normal to the reflector: 35 degrees
> Number of conductor patterns: 7 (serial arrangement)
> Pitch of conductor patterns: 5.4 mm (0.5λ)

Example 1

In Example 1, a fluorine-containing porous substrate is used as the base of the dielectric layer 11. The fluorine-containing porous substrate is a conjugate of a fluororesin and an inorganic porous aggregate. As the fluororesin, polytetrafluoroethylene is used. The thickness of this dielectric base is 0.75 mm, the porosity thereof is 33.2%, and the relative dielectric constant thereof is 1.88. The frequency band of reflection obtained in Example 1 is 6.6 GHz, and the band per unit thickness (1 mm) is 8.8 GHz/mm.

Example 2

In Example 2, a fluorine-containing porous substrate is used as the base of the dielectric layer 11. The thickness of this dielectric base is 0.75 mm, the porosity thereof is 67.7%, and the relative dielectric constant thereof is 1.50. The dielectric layer 11 is designed to have different porosity and relative dielectric constant by changing the aggregation density of the porous inorganic particles used in the fluorine-containing porous substrate. The frequency band of reflection obtained in Example 2 is 7.1 GHz, and the band per unit thickness (1 mm) is 9.5 GHz/mm.

Example 3

In Example 3, a fluorine-containing porous substrate is used as the base of the dielectric layer 11. The thickness of this dielectric base is 0.50 mm, the porosity thereof is 33.0%, and the relative dielectric constant thereof is 1.88. The dielectric layer 11 is designed to have different porosity and relative dielectric constant by changing the aggregation density of the porous inorganic particles used in the fluorine-containing porous substrate. Also, the dielectric layer 11 is thinner than in Examples 1 and 2. The frequency band of reflection obtained in Example 3 is 4.55 GHz, and the band per unit thickness (1 mm) is 9.1 GHz/mm.

Example 4

In Example 4, a fluorine-containing porous substrate is used as the base of the dielectric layer 11. The thickness of this dielectric base is 1.00 mm, the porosity thereof is 33.0%, and the relative dielectric constant thereof is 1.88. The thickness of the dielectric layer 11 is larger than in Examples 1 and 2. The frequency band of reflection obtained in Example 4 is 6.5 GHz, and the band per unit thickness (1 mm) is 6.5 GHz/mm.

Example 5

In Example 5, a fluorine-containing porous substrate is used as the base of the dielectric layer 11. The thickness of this dielectric base is 0.75 mm, the porosity thereof is 22.5%, and the relative dielectric constant thereof is 2.00. The dielectric layer 11 is designed to have different porosity and relative dielectric constant by controlling the aggregation density of the porous inorganic particles used in the fluorine-containing porous substrate. The frequency band of reflection obtained in Example 5 is 5.5 GHz, and the band per unit thickness (1 mm) is 7.3 GHz/mm.

Example 6

In Example 6, a fluorine-containing porous substrate is used as the base of the dielectric layer 11. The thickness of this dielectric base is 0.3 mm, the porosity thereof is 33.0%, and the relative dielectric constant thereof is 1.88. The thickness of the dielectric layer 11 is smaller than in Example 5. The frequency band of reflection obtained in Example 6 is 4.1 GHz, and the band per unit thickness (1 mm) is 13.7 GHz.

<Comparative Example 1>

In Comparative Example 1, PPE is used as the base of the dielectric layer 11. The thickness of the PPE base is 0.75 mm, the porosity thereof is 0.0%, and the relative dielectric constant thereof is 3.62. The frequency band of reflection obtained in Comparative Example 1 is 4.5 GHz, and the band per unit thickness (1 mm) is 6.0 GHz/mm. According to comparison between Examples 1, 2, and 5, which use the base having the same thickness, the frequency band of reflection is narrower as the relative dielectric constant is higher.

<Comparative Example 2>

In Comparative Example 2, a glass epoxy base is used as the base of the dielectric layer 11. The thickness of this dielectric base is 0.75 mm, the porosity thereof is 0.0%, and the relative dielectric constant thereof is 5.00. The relative dielectric constant is still higher than in Comparative Example 1. The frequency band of reflection obtained in Comparative Example 2 is 3.7 GHz, and the band per unit thickness (1 mm) is 4.9 GHz/mm.

<Comparative Example 3>

In Comparative Example 3, PPE is used as the base of the dielectric layer 11. The thickness of this dielectric base is 0.50 mm, the porosity thereof is 0.0%, and the relative dielectric constant thereof is 3.62. The frequency band of reflection obtained in Comparative Example 3 is 3.0 GHz, and the band per unit thickness (1 mm) is 6.0 GHz. Although the same PPE base as in Comparative Example 1 is used, the frequency band of reflection is still narrower as a result of reducing the thickness of the base.

The results shown in FIG. 10 indicate that when the relative dielectric constant of the dielectric layer 11 is 2.0 or less, broad-band reflection characteristics exceeding 6.5 GHz per unit thickness, preferably exceeding 7.0 GHz per unit thickness, and more preferably exceeding 8.0 GHz per unit thickness are obtained. When the dielectric layer is thin and the relative dielectric constant is 1.88 or less, the frequency band of 8.8 GHz or more per unit thickness is achieved. In Examples 5 and 6, by using the low-relative-dielectric-constant material in the fluororesin to be combined with the inorganic porous aggregates, the relative dielectric constant of 2.0 or less can be achieved at a porosity of the dielectric layer 11 of about 20%. The thickness of the dielectric layer 11 can be appropriately designed in accordance with the intended application. When the reflector 10 is used in a flexible form, the thickness of the dielectric layer 11 may be 0.3 mm or larger and 1.0 mm or smaller. By making the dielectric layer 11 have a thickness of 0.3 mm or larger, the reflector 10 having high robustness can be obtained. Also, if the thickness of the dielectric layer 11 is 1.0 mm or smaller, this is advantageous in terms of reduction in weight in designing a large reflector having one side of about 1 m, and is excellent in constructability and construction cost. When the thickness is described as 0.3 mm, 1.0 mm, or the like, the described thickness includes an allowable manufacturing error.

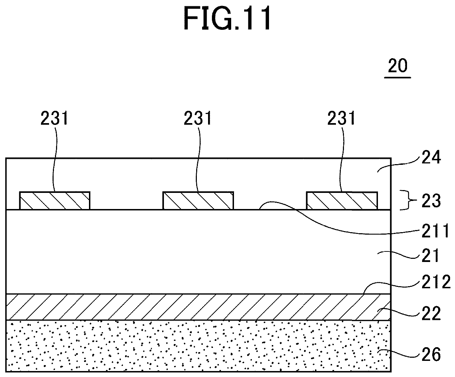

FIG. 11 is a schematic view of a reflector 20 of a second embodiment. The main components of the reflector 20 are the same as those of the reflector 10 of the first embodiment. The reflector 20 includes a dielectric layer 21 having a relative dielectric constant of 2.0 or less. A conductive layer 23 including predetermined conductor patterns 231 is formed on a first surface 211 of the dielectric layer 21, and a ground layer 22 is provided on a second surface 212. The conductor patterns 231 are designed such that the reflection direction of the main lobe with respect to the incident waves of the 28 GHz band is inclined by a predetermined angle from the normal direction. One example thereof is the patterns illustrated in (A) of FIG. 3.

A protective layer 24 is provided to cover the conductive layer 23. A tacky layer 26 is provided on the ground layer 22. By the presence of the tacky layer 26, the reflector 20 can be attached to desired locations, such as walls, ceilings, and the like. The protective layer 24 is transparent to incident waves of from 24 GHz through 30 GHz. Being transparent to incident waves means to have a transmittance to incident waves of 60% or more, preferably 70% or more, more preferably 80% or more, and further preferably 90% or more. The protective layer 24 may be transparent to visible light. By providing the protective layer 24, the reflector 20 can be attached to an outdoor bulletin board or to a wall surface of a building. The board on which the reflector 20 is attached may be hung at a desired position.

By the presence of the protective layer 24, the conductor patterns 231 of the reflector 20 are protected from degradation and damage due to external factors, and the reflector 20 has excellent durability. The conductor patterns 231 of the reflector 20 undergo oxidation degradation due to aging, such as, for example, by contact with oxygen and moisture in the atmosphere. Especially in outdoor use, the protective layer 24 is preferably formed from the viewpoint of weatherability. Even indoors, if the reflector 20 is disposed in an environment in which dew condensation or the like is likely to occur, the formation of the protective layer 24 is similarly preferable. The protective layer 24 preferably has a thickness of 0.1 mm or larger and 1.0 mm or smaller and a relative dielectric constant of 2.0 or less. By forming the protective layer 24 in this manner, it is possible to obtain the reflector 20 having both high durability and high transparency to incident waves of from 24 GHz through 30 GHz.

Using the model having the configuration illustrated in FIG. 11 excluding the tacky layer 26, simulation was performed under the following conditions, and reflection angle deviation (%) and reflection intensity loss (%) of the examples and the comparative examples were determined from the far radiation field, intensity, and angle of the reflection spectrum with respect to the incident waves.

Wavelength of incident waves: 10.7 mm (frequency: 28 GHz)
Frequency variable range of incident waves: from 20 GHz through 35 GHz
Incident angle of incident waves with respect to the direction normal to the reflector: 0 degrees
First desired reflection angle $\theta$ of reflection spectrum with respect to the direction normal to the reflector: -43 degrees
Number of conductor patterns: 5 (serial arrangement)
Pitch of conductor patterns: 5.4 mm ($0.5\lambda$)
Relative dielectric constant of the protective layer 24: 1.0 (Ref), 1.5, 2.0, 3.0, 5.0
Thickness of the protective layer 24: 0.0 mm (Ref), 0.2 mm, 0.5 mm, 1.0 mm

As the shape of the conductor patterns, five cross patterns having different sizes are used. By changing the thickness and relative dielectric constant of the protective layer 24 covering the conductor patterns, the reflection angle and the reflection intensity are calculated.

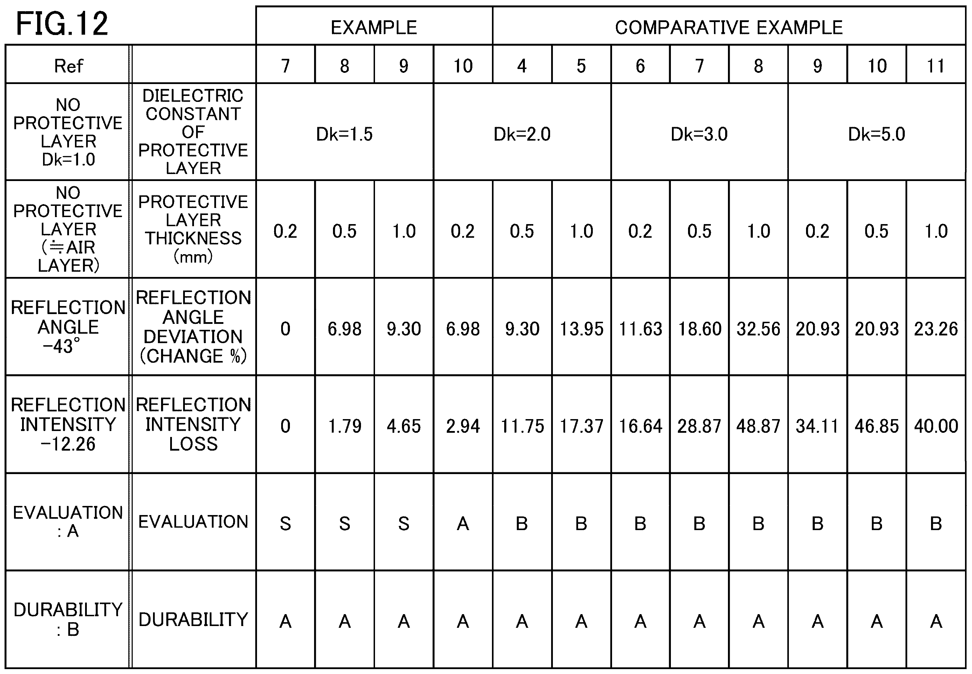

FIG. 12 illustrates the results of the simulation. "Ref" in the leftmost column of FIG. 12 shows the reference configuration without the protective layer 24. In the reference configuration, the air layer covers the conductor patterns, and thus the thickness of the protective layer 24 is defined as 0.0 mm and the relative dielectric constant is defined as 1.0. The unit of the reflection intensity in the reference configuration is (dB). "Reflection angle deviation" shows change (%) from the reflection angle in the reference configuration, and "reflection intensity loss" shows reduction percentage (%) from the reflection intensity in the reference configuration. With respect to the peak angle and peak intensity of the main lobe with respect to the incident waves, the reflection angle deviation (unit: %) and the reflection intensity loss (unit: %) were determined by comparing the reference configuration (Ref) with Examples 7 to 10 and Comparative Examples 4 to 11. The reflection angle deviation and the reflection intensity loss were evaluated as follows.

Reflection angle deviation was 10% or less: A
Reflection angle deviation was more than 10%: B
Reflection intensity loss was 5% or less: S
Reflection intensity loss was 10% or less: A
Reflection intensity loss was more than 10%: B

Overall evaluation

Pass: Both of the reflection angle deviation and the reflection intensity loss were evaluated as "A".
Fail: Either of the reflection angle deviation and the reflection intensity loss was evaluated as "B".

As shown in FIG. 12, Examples 7 to 10 were evaluated as "Pass". Also, the reflection intensity loss in Examples 7 to 9 was smaller, and more preferable results were obtained. According to FIG. 12, as the relative dielectric constant Dk is higher, the reflection angle deviation and the reflection intensity loss are greater. The relative dielectric constant Dk is desirably 2.0 or less. When the relative dielectric constant is 1.5 or less, the reflection intensity loss is 5% or less, which is more preferable (evaluated as "S" in FIG. 12). When the thickness of the protective layer 24 is larger, the reflection angle deviation and the reflection intensity loss are greater. The thickness of the protective layer 24 is preferably 0.1 mm or larger and 1.0 mm or smaller.

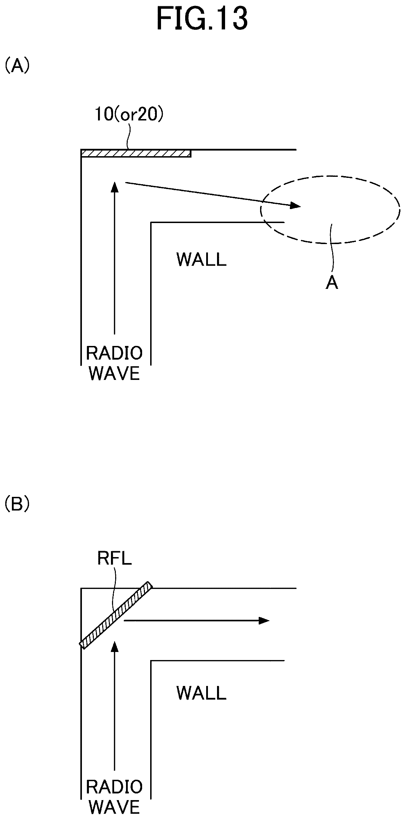

FIG. 13 illustrates an example of use of the reflector 20 according to the embodiment in comparison with use of a typical reflector. (A) of FIG. 13 illustrates how the reflector 10 or 20 of the embodiment is used. The thin and flexible reflector 10 or 20 of the embodiment can be disposed along a path, street, corridor, or the like that is bent in an L shape.

The reflector of the embodiment includes the metasurface including the periodical arrangement of the conductor patterns 131, and is configured to reflect incident waves in a direction other than the direction of specular reflection. As illustrated in FIG. 12, when radio waves are vertically incident on the reflector 10 or 20 disposed on the wall surface of the corner, the incident radio waves are reflected at an oblique angle, which is not the vertical or horizontal direction of the reflector. Thus, the radio waves can be sent to a smartphone, an electronic device, a lighting device, and the like located in an area A.

As illustrated in (B) of FIG. 13, a typical reflector RFL having a specular reflection surface reflects vertically incident radio waves in the incident direction. Therefore, the reflector RFL needs to be disposed at an angle oblique with respect to the incident radio waves. When the reflector is placed at the corner as illustrated in (B) of FIG. 13, the space cannot be effectively utilized. Meanwhile, the reflector 10 or 20 of the embodiment can reduce the dead zone of the radio waves without taking up space and without spoiling the outer appearance.

As described above, the reflector of the embodiment uses the low-relative-dielectric-constant dielectric layer, and can extend the frequency band of reflection and increase the resistance to the environment. Also, in an attempt to obtain the same reflection frequency characteristics, the thickness of the reflector can be reduced. Thus, the application range of the reflector can be widened. When the reflector is formed in a wallpaper sheet, the surface of the tacky layer 26 may be protected with a protective film, and the protective film may be released and attached to a desired place upon the use thereof. The reflector of the embodiment may be used in combination with a small cell or a relay (repeater). In this case, the dead zone can be further reduced without increasing the number of devices, such as a small cell, a repeater, or the like and without taking up space for disposition of the reflector.

The above disclosure may take the following embodiments.

(Clause 1)

A reflector, including:

a dielectric layer;
a conductive layer that is provided on a first surface of the dielectric layer and includes a periodical arrangement of a plurality of conductor patterns; and
a ground layer that is provided on a second surface opposite to the first surface, in which
the conductive layer is configured to reflect incident waves at an angle having a size different from that of an incident angle of the incident waves, and
the dielectric layer has a relative dielectric constant of 2.0 or less.

(Clause 2)

The reflector according to clause 1, in which

the conductive layer forms a reflection surface of the reflector, and
a tacky layer is provided on a side opposite to the reflection surface.

(Clause 3)

The reflector according to clause 1 or 2, further including:
a tacky layer that is provided on a surface of the ground layer opposite to the dielectric layer.

(Clause 4)

The reflector according to any one of clauses 1 to 3, further including:
a protective layer that covers the conductive layer.

(Clause 5)

The reflector according to clause 4, in which

a thickness of the protective layer is 0.1 mm or larger and 1.0 mm or smaller, and
a relative dielectric constant of the protective layer is 2.0 or less.

(Clause 6)

The reflector according to any one of clauses 1 to 5, in which
a thickness of the dielectric layer is 0.3 mm or larger and 1.0 m or smaller.

(Clause 7)

The reflector according to any one of clauses 1 to 6, in which
a size of the conductor patterns is 2 mm or more and 5 mm or less.

(Clause 8)

The reflector according to any one of clauses 1 to 7, in which
a bandwidth of a reflection frequency per unit thickness of the reflector exceeds 6.5 GHz/mm.

(Clause 9)

The reflector according to any one of clauses 1 to 8, in which

the dielectric layer is formed of a conjugate of a fluororesin and an inorganic porous aggregate, and
a porosity of the dielectric layer is 20% or more.

The present application claims priority to Japanese Patent Application No. 2022-006361 filed on January 19, 2022, and the entire contents of this Japanese Patent Application are incorporated herein by reference.

REFERENCE SIGNS LIST

| 10,20 | Reflector |
| 11,21 | Dielectric layer |
| 111,211 | First surface |
| 112,212 | Second surface |
| 12,22 | Ground layer |
| 13,23 | Conductive layer |
| 131,231 | Conductor pattern |
| 24 | Protective layer |
| 26 | Tacky layer |

**Claims**

**1.** A reflector, comprising:

a dielectric layer;
a conductive layer that is provided on a first surface of the dielectric layer and includes a periodical arrangement of a plurality of conductor patterns; and

a ground layer that is provided on a second surface opposite to the first surface, wherein
the conductive layer is configured to reflect incident waves at an angle having a size different from that of an incident angle of the incident waves, and
the dielectric layer has a relative dielectric constant of 2.0 or less.

2. The reflector according to claim 1, wherein

the conductive layer forms a reflection surface of the reflector, and
a tacky layer is provided on a side opposite to the reflection surface.

3. The reflector according to claim 1, further comprising:
a tacky layer that is provided on a surface of the ground layer opposite to the dielectric layer.

4. The reflector according to claim 1, further comprising:
a protective layer that covers the conductive layer.

5. The reflector according to claim 4, wherein

a thickness of the protective layer is 0.1 mm or larger and 1.0 mm or smaller, and
a relative dielectric constant of the protective layer is 2.0 or less.

6. The reflector according to claim 1, wherein
a thickness of the dielectric layer is 0.3 mm or larger and 1.0 m or smaller.

7. The reflector according to claim 1, wherein
a size of the conductor patterns is 2 mm or more and 5 mm or less.

8. The reflector according to claim 1, wherein
a bandwidth of a reflection frequency per unit thickness of the reflector exceeds 6.5 GHz/mm.

9. The reflector according to any one of claims 1 to 8, wherein

the dielectric layer is formed of a conjugate of a fluororesin and an inorganic porous aggregate, and
a porosity of the dielectric layer is 20% or more.

# FIG.1

# FIG.2

# FIG.3

(A)

(B)

| PATTERN NUMBER | L1 | L2 | L3 | L4 | L5 | L6 | L7 |
|---|---|---|---|---|---|---|---|
| PHASE (°) | 240 | 137 | 34 | 290 | 187 | 84 | −19 |
| LENGTH (mm) | 3.69 | 3.33 | 2.61 | 3.92 | 3.43 | 3.03 | 4.66 |

# FIG.4

# FIG.5

(A) ε =1.88_26 GHz

(B) ε =1.88_28 GHz

(C) ε =1.88_31 GHz

# FIG.6

(A) ε =3.62_26 GHz

(B) ε =3.62_28 GHz

(C) ε =3.62_31 GHz

# FIG.7A

$\varepsilon = 1.88$    ▦ −30−−20  ▦ −40−−30  ▦ −50−−40

REFLECTION DIRECTION (°)

EP 4 468 521 A1

# FIG.7B

ε =3.62

$\boxed{\vcenter{\hbox{▨}}}$ -30--20  $\boxed{\vcenter{\hbox{▨}}}$ -40--30  $\boxed{\vcenter{\hbox{□}}}$ -50--40

FREQUENCY (GHz)

35 34 33 32 31 30 29 28 27 26 25 24 23 22 21 20

-60 -58 -56 -54 -52 -50 -48 -46 -44 -42 -40 -38 -36 -34 -32 -30 -28 -26 -24 -22 -20 -18 -16 -14 -12 -10 -8 -6 -4 -2 0

REFLECTION DIRECTION (°)

EP 4 468 521 A1

# FIG.8

# FIG.9

# FIG.10

| | BASE THICKNESS (mm) | DIELECTRIC CONSTANT | POROSITY | BAND (GHz) | BAND (GHz) /THICKNESS (mm) | MATERIAL |
|---|---|---|---|---|---|---|
| EXAMPLE 1 | 0.75 | 1.88 | 33.2% | 6.6 | 8.8 | FLUORINE-CONTAINING POROUS BASE |
| EXAMPLE 2 | 0.75 | 1.50 | 67.7% | 7.1 | 9.5 | FLUORINE-CONTAINING POROUS BASE |
| EXAMPLE 3 | 0.50 | 1.88 | 33.0% | 4.55 | 9.1 | FLUORINE-CONTAINING POROUS BASE |
| EXAMPLE 4 | 1.00 | 1.88 | 33.0% | 6.5 | 6.5 | FLUORINE-CONTAINING POROUS BASE |
| EXAMPLE 5 | 0.75 | 2.00 | 22.5% | 5.5 | 7.3 | FLUORINE-CONTAINING POROUS BASE |
| EXAMPLE 6 | 0.30 | 1.88 | 33.0% | 4.1 | 13.7 | FLUORINE-CONTAINING POROUS BASE |
| COMPARA-TIVE EXAMPLE 1 | 0.75 | 3.62 | 0% | 4.5 | 6.0 | PPE BASE |
| COMPARA-TIVE EXAMPLE 2 | 0.75 | 5.00 | 0% | 3.7 | 4.94 | GLASS EPOXY BASE |
| COMPARA-TIVE EXAMPLE 3 | 0.50 | 3.62 | 0% | 3 | 6.0 | PPE BASE |

EP 4 468 521 A1

# FIG.11

20

231 231 231

24

23

211

21

212

22

26

# FIG.12

| Ref | | EXAMPLE | | | | COMPARATIVE EXAMPLE | | | | | | | |
|---|---|---|---|---|---|---|---|---|---|---|---|---|---|
| | | 7 | 8 | 9 | 10 | 4 | 5 | 6 | 7 | 8 | 9 | 10 | 11 |
| NO PROTECTIVE LAYER Dk=1.0 | DIELECTRIC CONSTANT OF PROTECTIVE LAYER | Dk=1.5 | | | | Dk=2.0 | | | Dk=3.0 | | | Dk=5.0 | | |
| NO PROTECTIVE LAYER (≒AIR LAYER) | PROTECTIVE LAYER THICKNESS (mm) | 0.2 | 0.5 | 1.0 | 0.2 | 0.5 | 1.0 | 0.2 | 0.5 | 1.0 | 0.2 | 0.5 | 1.0 |
| REFLECTION ANGLE −43° | REFLECTION ANGLE DEVIATION (CHANGE %) | 0 | 6.98 | 9.30 | 6.98 | 9.30 | 13.95 | 11.63 | 18.60 | 32.56 | 20.93 | 20.93 | 23.26 |
| REFLECTION INTENSITY −12.26 | REFLECTION INTENSITY LOSS | 0 | 1.79 | 4.65 | 2.94 | 11.75 | 17.37 | 16.64 | 28.87 | 48.87 | 34.11 | 46.85 | 40.00 |
| EVALUATION : A | EVALUATION | S | S | S | A | B | B | B | B | B | B | B | B |
| DURABILITY : B | DURABILITY | A | A | A | A | A | A | A | A | A | A | A | A |

EP 4 468 521 A1

# FIG.13

(A)

10(or20)

WALL

A

RADIO
WAVE

(B)

RFL

WALL

RADIO
WAVE

## INTERNATIONAL SEARCH REPORT

International application No.

**PCT/JP2023/000797**

### A. CLASSIFICATION OF SUBJECT MATTER

*H01Q 15/14*(2006.01)i
FI: H01Q15/14 Z

According to International Patent Classification (IPC) or to both national classification and IPC

### B. FIELDS SEARCHED

Minimum documentation searched (classification system followed by classification symbols)

H01Q15/14

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
|---|---|---|
| X | JP 2012-060530 A (YAGI ANTENNA CO., LTD.) 22 March 2012 (2012-03-22)<br>claim 1, paragraphs [0017], [0042]-[0046], fig. 4(a), 4(b) | 1-8 |
| A | entire text, all drawings | 9 |
| Y | US 4897151 A (GENERAL DYNAMICS CORP., POMONA DIVISION) 30 January 1990 (1990-01-30)<br>specification, column 2, line 62 to column 3, line 9, column 4, line 53 to column 5, line 21, column 6, line 45 to column 7, line 9, column 9, lines 17-27, fig. 5A, 5B, 6, 8, claims 1-17 | 1-8 |
| A | entire text, all drawings | 9 |
| Y | US 6067050 A (HER MAJESTY THE QUEEN IN RIGHT OF CANADA, AS REPRESENTED BY THE MINISTER OF INDUSTRY THROUGH THE COMMUNICATIONS RESEARCH CENTRE) 23 May 2000 (2000-05-23)<br>specification, column 3, line 43 to column 4, line 2, column 5, lines 32-53. fig. 1 | 1-8 |
| A | entire text, all drawings | 9 |

☑ Further documents are listed in the continuation of Box C.      ☑ See patent family annex.

| | |
|---|---|
| * Special categories of cited documents:<br>"A" document defining the general state of the art which is not considered to be of particular relevance<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search | Date of mailing of the international search report |
|---|---|
| **08 March 2023** | **28 March 2023** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (January 2015)

**INTERNATIONAL SEARCH REPORT**

International application No.

**PCT/JP2023/000797**

**C.     DOCUMENTS CONSIDERED TO BE RELEVANT**

| Category* | Citation of document, with indication, where appropriate, of the relevant passages | Relevant to claim No. |
|---|---|---|
| A | JP 2021-175054 A (KDDI CORP.) 01 November 2021 (2021-11-01)<br>entire text, all drawings | 1-9 |
| A | WO 2014/020969 A1 (NTT DOCOMO, INC.) 13 February 2014 (2014-02-13)<br>entire text, all drawings | 1-9 |

Form PCT/ISA/210 (second sheet) (January 2015)

INTERNATIONAL SEARCH REPORT
Information on patent family members

International application No.

**PCT/JP2023/000797**

| Patent document cited in search report | | | Publication date (day/month/year) | Patent family member(s) | | | Publication date (day/month/year) |
|---|---|---|---|---|---|---|---|
| JP | 2012-060530 | A | 22 March 2012 | (Family: none) | | | |
| US | 4897151 | A | 30 January 1990 | (Family: none) | | | |
| US | 6067050 | A | 23 May 2000 | CA | 2205873 | A1 | |
| JP | 2021-175054 | A | 01 November 2021 | (Family: none) | | | |
| WO | 2014/020969 | A1 | 13 February 2014 | EP | 2882036 | A1 | |
| | | | | JP | 2014-030139 | A | |
| | | | | US | 2015/0070246 | A1 | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 5177708 B
- JP 2017171898 A

- JP 2022006361 A